# EUROPEAN PATENT SPECIFICATION

(11) **EP 3 591 304 B1**
(45) Date of publication and mention of the grant of the patent: **05.04.2023**
(21) Application number: 17899186.5
(22) Date of filing: 02.03.2017
(51) Int. Cl.: F24F 11/30, F24F 11/36, F24F 11/89

(54) **REFRIGERATION CYCLE DEVICE AND REFRIGERATION CYCLE SYSTEM**
KÄLTEKREISLAUFVORRICHTUNG UND KÄLTEKREISLAUFVERFAHREN
DISPOSITIF À CYCLE DE RÉFRIGÉRATION ET SYSTÈME À CYCLE DE RÉFRIGÉRATION

(43) Date of publication of application: 08.01.2020
(73) Proprietor: Mitsubishi Electric Corporation, Chiyoda-ku Tokyo 100-8310 (JP)
(72) Inventor: TAKAGI, Masahiko, Tokyo 100-8310 (JP); SUZUKI, Yasuhiro, Tokyo 100-8310 (JP); TANAKA, Kenyu, Tokyo 100-8310 (JP); WATANABE, Kazuki, Tokyo 100-8310 (JP)
(74) Representative: Pfenning, Meinig & Partner mbB
(86) International application number: PCT/JP2017/008318
(87) International publication number: WO 2018/158912

(56) References cited:
- EP-A1- 2 535 651
- WO-A1-2017/006462
- WO-A1-2017/026147
- WO-A1-2017/026147
- JP-A- 2016 090 110
- JP-A- 2016 191 542

## Description

### Technical Field

The present invention relates to a refrigeration cycle device and a refrigeration cycle system that detect the leakage of refrigerant with a refrigerant detector.

### Background Art

Patent Literature 1 describes an air conditioning device. The air conditioning device is equipped with a gas sensor that is provided on the outer surface of an indoor unit and that detects refrigerant, and a controller that causes an indoor air-sending fan to rotate when the gas sensor detects refrigerant. In this air conditioning device, in the case where refrigerant leaks into a room from an extension pipe connected to the indoor unit, or in the case where refrigerant leaking internally in the indoor unit passes through a gap in the housing of the indoor unit and flows to the outside of the indoor unit, the leaking refrigerant can be detected by the gas sensor. Also, by causing the indoor air-sending fan to rotate when the leakage of refrigerant is detected, as air inside the room is sucked into an air inlet provided in the housing of the indoor unit and air is blown out into the room from an air outlet, the leaking refrigerant can be diffused. WO2017/006462 A1 and WO2017/026147 A1 disclose refrigeration cycle apparatuses that stop the detection of leaking refrigerant when a rotational speed of the air-sending fan is equal to or greater than a first threshold rotational speed.

### Citation List

### Patent Literature

Patent Literature 1: Japanese Patent No. 4599699

### Summary of Invention

### Technical Problem

A gas sensor such as a semiconductor gas sensor that is a refrigerant detector has a feature of reacting to hydrogen (H), carbon (C), or other substances in the atmosphere. A gas sensor having such a feature reacts to the nearby existence of substances containing hydrogen (H) and carbon (C), such as propane (CsHs), butane (C₄H₁₀), and ethanol (C₂H₆O). Note that propane (CsHs) or butane (C₄H₁₀) is contained in sprays commercially available. Also, ethanol (C₂H₆O) is used widely as a disinfectant alcohol.

For such reasons, in an environment where an air conditioning device is used, when sprays including propane or butane are used or when ethanol is used as a disinfectant alcohol, there is a possibility that the gas sensor incorrectly detects leakage even though refrigerant is not present. The air conditioning device often is configured to, in the case where refrigerant is incorrectly detected, activate an abnormality alarm and stop running. For this reason, there are issues such as that a user is unable to run the air conditioning device until the air conditioning device is repaired by a service member, even though refrigerant is not leaking.

The present invention has been devised to address issues like the above, and an objective of the present invention is to provide a refrigeration cycle device and a refrigeration cycle system capable of inhibiting a change in the detection characteristics of a refrigerant detector.

### Solution to Problem

A refrigeration cycle device according to an embodiment of the present invention includes a refrigerant circuit configured to cause refrigerant to circulate, a heat exchanger unit that houses a heat exchanger of the refrigerant circuit, and a controller configured to control the heat exchanger unit. The heat exchanger unit is provided with an air-sending fan and a refrigerant detector. The controller is configured to cause the air-sending fan to run, and is configured to disregard a detection signal from the refrigerant detector when a rotational speed of the air-sending fan is equal to or greater than a first threshold value, even if the controller detects a leakage of refrigerant on the basis of the detection signal from the refrigerant detector.

A refrigeration cycle system according to an embodiment of the present invention includes a refrigeration cycle device including a refrigerant circuit configured to cause refrigerant to circulate and a controller configured to control the refrigerant circuit, an air-sending fan controlled by the controller, and a refrigerant detector configured to output a detection signal to the controller. The controller is configured to cause the air-sending fan to run, and is configured to disregard the detection signal from the refrigerant detector when a rotational speed of the air-sending fan is equal to or greater than a first threshold value, even if the controller detects a leakage of refrigerant on the basis of the detection signal from the refrigerant detector. Advantageous Effects of Invention

According to the present invention, as a configuration that disregards the detection signal from the refrigerant detector is provided, it is possible to prevent incorrect detection by the refrigerant detector in conditions where the air-sending fan is rotating and a flammable zone cannot be imposed.

### Brief Description of Drawings

[Fig. 1] Fig. 1 is a refrigerant circuit diagram illustrating a schematic configuration of an air conditioning device according to Embodiment 1 of the present invention.
[Fig. 2] Fig. 2 is a front view schematically illustrating an internal structure of an indoor unit 1 of the air conditioning device according to Embodiment 1 of the present invention.
[Fig. 3] Fig. 3 is a side view schematically illustrating the internal structure of the indoor unit 1 of the air conditioning device according to Embodiment 1 of the present invention.
[Fig. 4] Fig. 4 is a flowchart illustrating one example of a refrigerant leakage detection process executed by a controller 30 of the air conditioning device according to Embodiment 1 of the present invention.
[Fig. 5] Fig. 5 is a state transition diagram illustrating one example of state transitions of the air conditioning device according to Embodiment 1 of the present invention.
[Fig. 6] Fig. 6 is a diagram illustrating the relationship, in an air conditioning device according to Embodiment 2 of the present invention, between the rotational speed of an indoor air-sending fan 7f and states of the air conditioning device.
[Fig. 7] Fig. 7 is a diagram schematically illustrating a configuration of an outdoor unit 2 of an air conditioning device according to Embodiment 3 of the present invention.
[Fig. 8] Fig. 8 is a diagram illustrating a schematic overall configuration of a refrigeration cycle system according to Embodiment 4 of the present invention.
[Fig. 9] Fig. 9 is a block diagram illustrating a configuration of a controller 30 of the refrigeration cycle system according to Embodiment 4 of the present invention. Description of Embodiments

### Embodiment 1

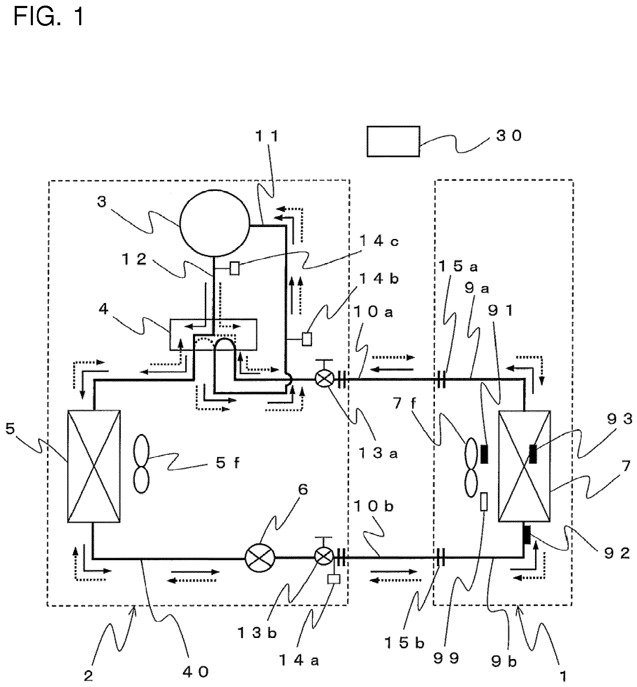

A refrigeration cycle device according to Embodiment 1 of the present invention will be described. In Embodiment 1, an air conditioning device is illustrated as one example of a refrigeration cycle device. Fig. 1 is a refrigerant circuit diagram illustrating a schematic configuration of the air conditioning device according to Embodiment 1. Note that in the following diagrams, including Fig. 1, the relative dimensions, shapes, and other features of each of the structural elements may differ from those of the actual elements in some cases.

As illustrated in Fig. 1, the air conditioning device includes a refrigerant circuit 40 that causes refrigerant to circulate. The refrigerant circuit 40 has a configuration in which a compressor 3, a refrigerant channel switching device 4, a heat source side heat exchanger 5 (for example, an outdoor heat exchanger), a pressure-reducing device 6, and a load side heat exchanger 7 (for example, an indoor heat exchanger) are sequentially connected in a ring via refrigerant pipes. Also, the air conditioning device includes an outdoor unit 2 installed outdoors for example as a heat source unit. Furthermore, the air conditioning device includes an indoor unit 1 (one example of a heat exchanger unit) installed indoors for example as a load unit. The indoor unit 1 and the outdoor unit 2 are connected via extension pipes 10a and 10b that are part of the refrigerant pipes.

For the refrigerant that circulates through the refrigerant circuit 40, for example, a mildly flammable refrigerant such as HFO-1234yf and HFO-1234ze, or a highly flammable refrigerant such as R290 and R1270 is used. These refrigerants may be used as a single refrigerant, or two or more types may be mixed and used as a refrigerant mixture. Hereinafter, refrigerants that have at least a mild level of flammability (for example, 2L or higher in the classification of ASHRAE 34), will be designated as "flammable refrigerants" in some cases. Also, for the refrigerant that circulates through the refrigerant circuit 40, it is also possible to use a non-flammable refrigerant such as R22 and R410A designated as non-flammable (1 in the classification of ASHRAE 34). These refrigerants are denser than air under atmospheric pressure, for example.

The compressor 3 is a fluid machine that compresses suctioned low-pressure refrigerant, and discharges high-pressure refrigerant. The refrigerant channel switching device 4 switches the directions of the flow of refrigerant inside the refrigerant circuit 40 between cooling operation and heating operation. For the refrigerant channel switching device 4, a four-way valve is used, for example. The heat source side heat exchanger 5 is a heat exchanger that serves as a radiator (for example, a condenser) during cooling operation, and as an evaporator during heating operation. In the heat source side heat exchanger 5, heat is exchanged between internally circulating refrigerant and outdoor air sent by an outdoor air-sending fan 5f described later. The pressure-reducing device 6 reduces the pressure of high-pressure refrigerant to produce low-pressure refrigerant. For the pressure-reducing device 6, an electronic expansion valve or another device with an adjustable opening degree is used, for example. The load side heat exchanger 7 is a heat exchanger that serves as an evaporator during cooling operation and as a radiator (for example, a condenser) during heating operation. In the load side heat exchanger 7, heat is exchanged between internally circulating refrigerant and air sent by an indoor air-sending fan 7f described later. Herein, cooling operation refers to operation that supplies low-temperature and low-pressure refrigerant to the load side heat exchanger 7, while heating operation refers to operation that supplies high-temperature and high-pressure refrigerant to the load side heat exchanger 7.

The outdoor unit 2 houses the compressor 3, the refrigerant channel switching device 4, the heat source side heat exchanger 5, and the pressure-reducing device 6. Also, the outdoor unit 2 houses the outdoor air-sending fan 5f that supplies outdoor air to the heat source side heat exchanger 5. The outdoor air-sending fan 5f is installed to face the heat source side heat exchanger 5. By causing the outdoor air-sending fan 5f to rotate, airflow that passes through the heat source side heat exchanger 5 is generated. For the outdoor air-sending fan 5f, a propeller fan is used, for example. The outdoor air-sending fan 5f is disposed downstream of the heat source side heat exchanger 5 for example in the airflow generated by the outdoor air-sending fan 5f.

In the outdoor unit 2, a refrigerant pipe that serves as a gas pipe during cooling operation and that joins an extension pipe connecting valve 13a to the refrigerant channel switching device 4, a suction pipe 11 connected to the suction port of the compressor 3, a discharge pipe 12 connected to the discharge port of the compressor 3, a refrigerant pipe that joins the refrigerant channel switching device 4 to the heat source side heat exchanger 5, a refrigerant pipe that joins the heat source side heat exchanger 5 to the pressure-reducing device 6, and a refrigerant pipe that serves as a liquid pipe during cooling operation and that joins an extension pipe connecting valve 13b to the pressure-reducing device 6 are disposed as the refrigerant pipes. The extension pipe connecting valve 13a is a two-way valve capable of switching between being open and closed and having one end with a flare fitting attached. Also, the extension pipe connecting valve 13b is configured as a three-way pipe capable of switching between being open and closed. One end of the extension pipe connecting valve 13b is attached with a service port 14a used for vacuuming in preparation for filling the refrigerant circuit 40 with refrigerant, while the other end is attached with a flare fitting.

Through the discharge pipe 12, high-temperature and high-pressure gas refrigerant compressed by the compressor 3 flows during both cooling operation and heating operation. Through the suction pipe 11, low-temperature and low-pressure gas refrigerant or two-phase refrigerant subjected to evaporation flows during both cooling operation and heating operation. A service port 14b having a flare fitting for low-pressure part is connected to the suction pipe 11, while a service port 14c having a flare fitting for the high-pressure part is connected to the discharge pipe 12. The service ports 14b and 14c are used to connect a pressure gauge and measure the running pressure during a test run for installation and repair of the air conditioning device.

The indoor unit 1 houses the load side heat exchanger 7. Also, in the indoor unit 1, the indoor air-sending fan 7f that supplies air to the load side heat exchanger 7 is installed. By causing the indoor air-sending fan 7f to rotate, airflow that passes through the load side heat exchanger 7 is generated. For the indoor air-sending fan 7f, depending on the form of the indoor unit 1, a centrifugal fan (such as a sirocco fan and turbo fan), a cross-flow fan, a diagonal flow fan, an axial flow fan (for example, a propeller fan), or another fan is used. The indoor air-sending fan 7f of the present example is installed upstream of the load side heat exchanger 7 in the airflow generated by the indoor air-sending fan 7f, but may also be installed downstream of the load side heat exchanger 7.

In an indoor pipe 9a that is a gas pipe among the refrigerant pipes of the indoor unit 1, at the site of connection with an extension pipe 10a that is a gas pipe, a fitting section 15a (for example, a flare fitting) for connecting the extension pipe 10a is provided. Also, in an indoor pipe 9b that is a liquid pipe among the refrigerant pipes of the indoor unit 1, at the site of connection with an extension pipe 10b that is a liquid pipe, a fitting section 15b (for example, a flare fitting) for connecting the extension pipe 10b is provided.

Also, the indoor unit 1 is provided with a suction air temperature sensor 91 that measures the temperature of indoor air sucked in from the indoor space, a heat exchanger inlet temperature sensor 92 that measures the refrigerant temperature at the inlet during cooling operation (the outlet during heating operation) of the load side heat exchanger 7, a heat exchanger temperature sensor 93 that measures the two-phase refrigerant temperature (evaporating temperature or condensing temperature) of the load side heat exchanger 7, or other sensors. Furthermore, the indoor unit 1 is provided with a refrigerant detector 99 (for example, a semiconductor gas sensor) described later. These sensors are configured to output detection signals to a controller 30 that controls the indoor unit 1 or the air conditioning device as a whole.

The controller 30 includes a microcomputer (hereinafter designated as "micro" in some cases) provided with a CPU, ROM, RAM, input-output ports, and another device. The controller 30 is able to communicate data bidirectionally with an operating unit not illustrated. The operating unit receives an operation performed by a user, and outputs an operating signal based on the operation to the controller 30. The controller 30 of the present example controls the action of the indoor unit 1 or the air conditioning device as a whole, including the action of the indoor air-sending fan 7f, on the basis of operating signals from the operating unit, detection signals from the sensors, or other signals. Also, the controller 30 is able to switch between powering and not powering the refrigerant detector 99. The controller 30 may be provided inside the housing of the indoor unit 1 or inside the housing of the outdoor unit 2. Also, the controller 30 may be configured with an outdoor unit controller provided in the outdoor unit 2 and an indoor unit controller provided in the indoor unit 1 and capable of data communication with the outdoor unit controller.

Next, the action of the refrigerant circuit 40 of the air conditioning device will be described. First, the action during cooling operation will be described. In Fig. 1, the solid arrows illustrate the direction of the flow of refrigerant during cooling operation. In cooling operation, the refrigerant channel is switched by the refrigerant channel switching device 4 as illustrated by the solid lines, and a refrigerant circuit 40 is configured in such a manner that low-temperature and low-pressure refrigerant flows to the load side heat exchanger 7.

High-temperature and high-pressure gas refrigerant discharged from the compressor 3 first flows into the heat source side heat exchanger 5 via the refrigerant channel switching device 4. In cooling operation, the heat source side heat exchanger 5 serves as a condenser. In other words, in the heat source side heat exchanger 5, heat is exchanged between internally circulating refrigerant and outdoor air sent by the outdoor air-sending fan 5f, and the heat of condensation of the refrigerant is transferred to the outdoor air. With this action, the refrigerant flowing into the heat source side heat exchanger 5 condenses to become high-pressure liquid refrigerant. The high-pressure liquid refrigerant flows into the pressure-reducing device 6, and is decompressed to become low-pressure two-phase refrigerant. The low-pressure two-phase refrigerant flows into the load side heat exchanger 7 of the indoor unit 1 via the extension pipe 10b. In cooling operation, the load side heat exchanger 7 serves as an evaporator. In other words, in the load side heat exchanger 7, heat is exchanged between internally circulating refrigerant and air (for example, indoor air) sent by the indoor air-sending fan 7f, and the heat of evaporation of the refrigerant is received from the sent air. With this action, the refrigerant flowing into the load side heat exchanger 7 evaporates to become low-pressure gas refrigerant or two-phase refrigerant. Also, the air sent by the indoor air-sending fan 7f is cooled by the heat-absorbing action of the refrigerant. The low-pressure gas refrigerant or two-phase refrigerant evaporated in the load side heat exchanger 7 passes through the extension pipe 10a and the refrigerant channel switching device 4, and is suctioned into the compressor 3. The refrigerant suctioned into the compressor 3 is compressed to become high-temperature and high-pressure gas refrigerant. In cooling operation, the above cycle is repeated.

Next, the action during heating operation will be described. In Fig. 1, the dashed arrows illustrate the direction of the flow of refrigerant during heating operation. In heating operation, the refrigerant channel is switched by the refrigerant channel switching device 4 as illustrated by the dashed lines, and a refrigerant circuit 40 is configured in such a manner that high-temperature and high-pressure refrigerant flows to the load side heat exchanger 7. In heating operation, refrigerant flows in the opposite direction than that of cooling operation, and the load side heat exchanger 7 serves as a condenser. In other words, in the load side heat exchanger 7, heat is exchanged between internally circulating refrigerant and air sent by the indoor air-sending fan 7f, and the heat of condensation of the refrigerant is transferred to the sent air. With this action, the air sent by the indoor air-sending fan 7f is heated by the heat-transferring effect of the refrigerant.

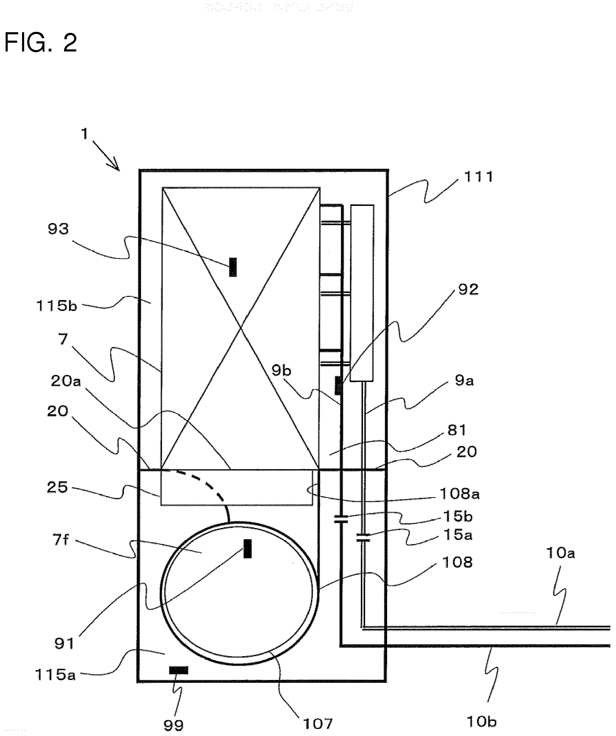

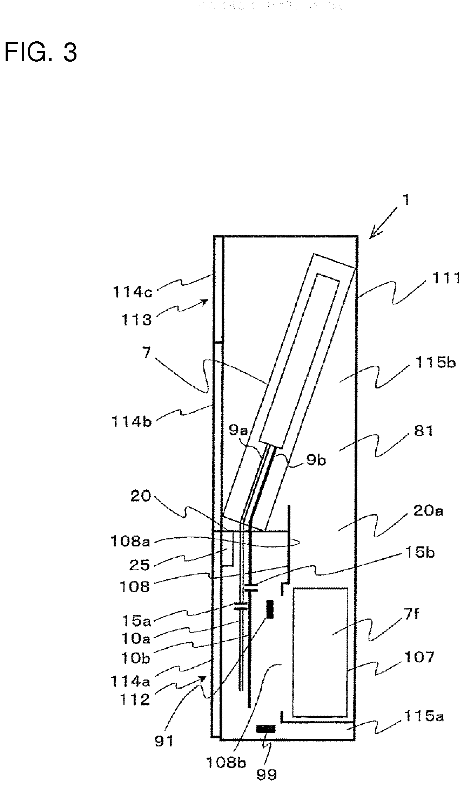

Fig. 2 is a front view schematically illustrating the internal structure of the indoor unit 1 of the air conditioning device according to Embodiment 1. Fig. 3 is a side view schematically illustrating the internal structure of the indoor unit 1 of the air conditioning device according to Embodiment 1. The direction to the left in Fig. 3 illustrates the front side (that is, the indoor space side) of the indoor unit 1. In Embodiment 1, a floor-mounted indoor unit 1 installed on the floor of the indoor space to be air-conditioned is illustrated as an example of the indoor unit 1. Note that the positional relationships (such as the up-and-down relationships) between structural elements in the following description are basically those in a state in which the indoor unit 1 is installed to be usable.

As illustrated in Figs. 2 and 3, the indoor unit 1 is provided with a housing 111 having a vertically elongated cuboid shape. On the lower front face of the housing 111, an air inlet 112 that sucks in the air of the indoor space is formed. The air inlet 112 of the present example is lower than midway in the vertical direction of the housing 111, and is provided at a position close to the floor. On the upper front face of the housing 111, or in other words at a higher position than the height of the air inlet 112 (for example, higher than midway in the vertical direction of the housing 111), an air outlet 113 that blows out air sucked in from the air inlet 112 into the room is formed. On the front face of the housing 111, an operating unit not illustrated is provided above the air inlet 112 and below the air outlet 113. With the operating unit, an operation of starting the running of the air conditioning device, an operation of stopping the running, switching the running mode, making a set temperature and a set airflow rate, and other operations are performed by user operations. The operating unit may also be provided with a display, a sound output unit, or other units that notify the user of information.

The housing 111 is a hollow box shape, and a frontal opening is provided in the front face of the housing 111. The housing 111 is provided with a first front panel 114a, a second front panel 114b, and a third front panel 114c that are attached to the frontal opening and are removable from the frontal opening. The first front panel 114a, the second front panel 114b, and the third front panel 114c all have an external shape that is a substantially rectangular tabular shape. The first front panel 114a is attached to the lower part of the frontal opening of the housing 111 and is removable from the housing 111. The air inlet 112 described above is formed in the first front panel 114a. The second front panel 114b is disposed adjacently above the first front panel 114a, is attached to the middle part in the vertical direction of the frontal opening of the housing 111, and is removable from the housing 111. The operating unit described above is provided on the second front panel 114b. The third front panel 114c is disposed adjacently above the second front panel 114b, is attached to the upper part of the frontal opening of the housing 111, and is removable from the housing 111. The air outlet 113 described above is formed in the third front panel 114c.

The interior space of the housing 111 is roughly divided into a space 115a that serves as an air-sending section, and a space 115b that is positioned above the space 115a and that serves as a heat-exchanging section. The space 115a and the space 115b are partitioned from each other by a partition 20. The partition 20 has a tabular shape, for example, and is positioned mostly horizontally. In the partition 20, an air duct opening 20a that serves as an air duct between the space 115a and the space 115b is at least provided. The space 115a is configured to be exposed on the front side by removing the first front panel 114a from the housing 111, and the space 115b is configured to be exposed on the front side by removing the second front panel 114b and the third front panel 114c from the housing 111. In other words, the height at which the partition 20 is installed mostly matches the height of the upper edge of the first front panel 114a or the lower edge of the second front panel 114b. At this point, the partition 20 may be formed integrally with a fan casing 108 described later, may be formed integrally with a drain pan described later, or may be formed separately from the fan casing 108 and the drain pan.

In the space 115a, the indoor air-sending fan 7f that causes a flow of air proceeding from the air inlet 112 to the air outlet 113 to be produced in an air duct 81 in the housing 111 is disposed. The indoor air-sending fan 7f of the present example is a sirocco fan provided with a motor not illustrated and an impeller 107 that is connected to the output shaft of the motor and on which multiple blades are disposed at equal intervals in the circumferential direction for example. The rotation axis of the impeller 107 is disposed substantially parallel to the depth direction of the housing 111. The rotational speed of the indoor air-sending fan 7f is set variably in multiple stages (for example, two or more stages) or is set variably and continuously, through control by the controller 30 based on the set airflow rate or other factors set by the user.

The impeller 107 of the indoor air-sending fan 7f is covered by a spiral-shaped fan casing 108. The fan casing 108 is formed separately from the housing 111 for example. Close to the center of the spiral of the fan casing 108, an air inlet opening 108b that sucks in indoor air into the fan casing 108 through the air inlet 112 is provided. The air inlet opening 108b is disposed to face the air inlet 112. Also, in the tangential direction of the spiral of the fan casing 108, an air outlet opening 108a that blows out sent air is provided. The air outlet opening 108a is disposed to face upward, and is connected to the space 115b through an air duct opening 20a of the partition 20. In other words, the air outlet opening 108a communicates with the space 115b through the air duct opening 20a. The open edge of the air outlet opening 108a and the open edge of the air duct opening 20a may be joined directly, or may be joined indirectly via a part such as a duct.

Additionally, in the space 115a, an electrical component box 25 housing the microcomputer that corresponds to the controller 30, various electrical components, circuit boards, and other components, for example, is provided.

In the air duct 81 inside the space 115b, the load side heat exchanger 7 is disposed. Below the load side heat exchanger 7, a drain pan (not illustrated) that receives condensed water condensed on the surface of the load side heat exchanger 7 is provided. The drain pan may be formed as a part of the partition 20, or may be formed separately from the partition 20 and disposed on the partition 20.

At a position close to the lower end of the space 115a, the refrigerant detector 99 is provided. For the refrigerant detector 99, an electrical refrigerant detector including an electrical gas sensor such as a semiconductor gas sensor and a hot wire semiconductor gas sensor is used. For example, the refrigerant detector 99 detects the refrigerant concentration in the air surrounding the refrigerant detector 99, and outputs a detection signal to the controller 30. In the controller 30, the presence or absence of refrigerant leakage is determined on the basis of the detection signal from the refrigerant detector 99.

In the indoor unit 1, the parts at risk of refrigerant leakage are the brazing portion of the load side heat exchanger 7 and the fitting sections 15a and 15b. Also, the refrigerant used in Embodiment 1 is denser than air under atmospheric pressure. Consequently, the refrigerant detector 99 according to Embodiment 1 is provided at a position lower than the height of the load side heat exchanger 7 and the fitting sections 15a and 15b inside the housing 111. With this arrangement, at least while the indoor air-sending fan 7f is stopped, the refrigerant detector 99 is able to detect leaking refrigerant reliably. Note that in Embodiment 1, the refrigerant detector 99 is provided at a position close to the lower end of the space 115a, but the installation position of the refrigerant detector 99 may also be at another position.

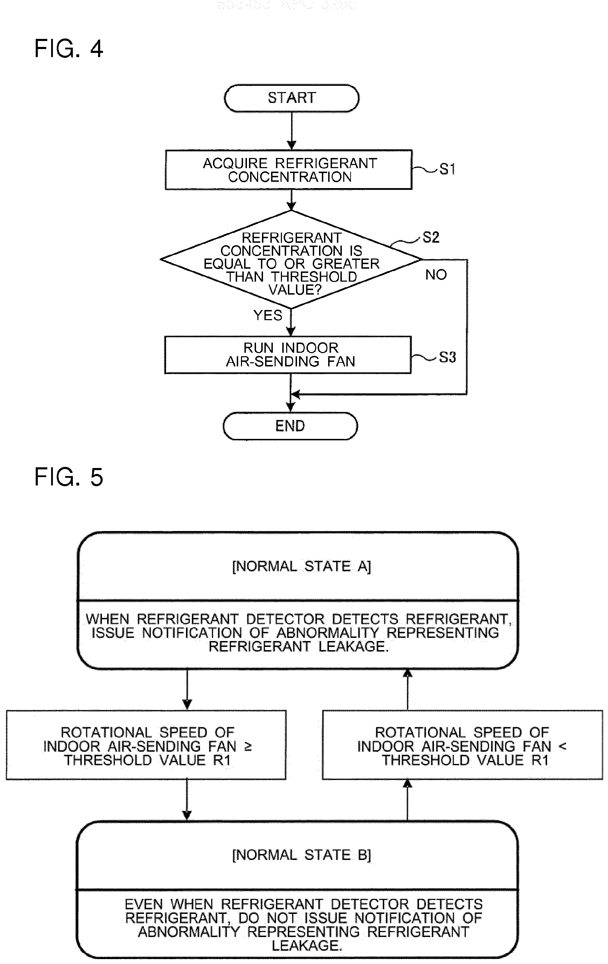

Fig. 4 is a flowchart illustrating one example of a refrigerant leakage detection process executed by the controller 30 of the air conditioning device according to Embodiment 1. The refrigerant leakage detection process is executed repeatedly on a certain time interval while the air conditioning device is running and stopped, which corresponds to all the time, only while the air conditioning device is stopped, or only during a normal state A described later.

In step S1 of Fig. 4, the controller 30 acquires information about the refrigerant concentration around the refrigerant detector 99, on the basis of the detection signal from the refrigerant detector 99.

Next, in step S2, it is determined whether or not the refrigerant concentration around the refrigerant detector 99 is equal to or greater than a preset threshold value. When the controller 30 determines that the refrigerant concentration is equal to or greater than the threshold value, the process proceeds to step S3, whereas when the controller 30 determines that the refrigerant concentration is less than the threshold value, the process ends.

In step S3, the running of the indoor air-sending fan 7f is started. In the case where the indoor air-sending fan 7f is already running, the running is continued. Also, in step S3, the rotational speed of the indoor air-sending fan 7f may be set to a rotational speed capable of diffusing refrigerant sufficiently even if the amount of refrigerant leakage is a maximum (for example, a rotational speed equal to or greater than a threshold value R1 described later). This rotational speed is not limited to a rotational speed used during normal running. In step S3, the display, sound output unit, or other units provided on the operating unit may be used to notify the user that a leakage of refrigerant has occurred. Note that the notification will be described in detail with Fig. 5.

As above, in the refrigerant leakage detection process, in the case where the leakage of refrigerant is detected (that is, in the case where the refrigerant concentration detected by the refrigerant detector 99 is equal to or greater than the threshold value), the running of the indoor air-sending fan 7f is started. With this process, as the leaking refrigerant can be diffused, it is possible to inhibit local increases in the refrigerant concentration in the indoor space.

As described above, in Embodiment 1, a flammable refrigerant such as HFO-1234yf, HFO-1234ze, R290, and R1270, for example, is used as the refrigerant circulating through the refrigerant circuit 40. For this reason, in the case of an emergency in which a leakage of refrigerant occurs in the indoor unit 1, there is a risk that the refrigerant concentration in the indoor space rises and a flammable concentration zone (for example, a zone in which the refrigerant concentration reaches the lower flammability limit (LFL) or higher) is imposed.

These flammable refrigerants are denser than air under atmospheric pressure. Consequently, in the case where a leakage of refrigerant occurs at a position where the height from the indoor floor is relatively high, as the leaking refrigerant diffuses while falling and the refrigerant concentration becomes uniform throughout the indoor space, the refrigerant concentration is less likely to rise. In contrast, in the case where a leakage of refrigerant occurs at a position of low height from the indoor floor, as the leaking refrigerant accumulates at a low position close to the floor, the refrigerant concentration is more likely to rise locally. Consequently, there is a relatively higher probability that a flammable concentration zone is imposed.

While the air conditioning device is running, air is blown into the indoor space by the running of the indoor air-sending fan 7f of the indoor unit 1. For this reason, even in the unlikely case that flammable refrigerant leaks indoors, the leaking flammable refrigerant is diffused indoors by the blown air. With this action, a flammable concentration zone can be prevented from being imposed indoors. However, while the air conditioning device is stopped, as the indoor air-sending fan 7f of the indoor unit 1 is also stopped, it is not possible for leaking refrigerant to be diffused by blown air. Consequently, it is particularly necessary to detect leaking refrigerant while the air conditioning device is stopped. In Embodiment 1, as the running of the indoor air-sending fan 7f is started in the case where a leakage of refrigerant is detected, even if flammable refrigerant leaks indoors while the air conditioning device is stopped, a flammable concentration zone can be prevented from being imposed indoors.

Herein, the indoor air-sending fan 7f whose running is started in step S3 of Fig. 4 may also be configured to stop after the elapse of a certain time set in advance.

Fig. 5 is a state transition diagram illustrating one example of state transitions of the air conditioning device according to Embodiment 1. As illustrated in Fig. 5, the states of the air conditioning device at least include a normal state A and a normal state B. The normal state A and the normal state B of the present example are both states in which a leakage of refrigerant is not occurring. In the air conditioning device in the normal state A or the normal state B, normal running action and stopping action are performed on the basis of, for example, user operations performed on the operating unit. The air conditioning device is configured to bidirectionally transition between the normal state A and the normal state B through control by the controller 30 on the basis of the rotational speed of the indoor air-sending fan 7f. A threshold value for the rotational speed used to determine state transition is stored in the ROM of the controller 30 in advance.

The air conditioning device while stopped is in the normal state A. In the normal state A, the refrigerant detector 99 is powered through control by the controller 30. With this arrangement, the refrigerant detector 99 enters a working state capable of detecting refrigerant. In other words, the normal state A is a state in which a leakage of refrigerant is detectable by the refrigerant detector 99. Additionally, in the normal state A, when the controller 30 detects a leakage of refrigerant on the basis of the detection signal from the refrigerant detector 99, the controller 30 causes the indoor air-sending fan 7f to run, and issues a notification about the leakage of refrigerant. It is sufficient to issue the notification by displaying at least one of text and an image or by emitting at least one of speech and a buzzer. The notification can be issued using at least one of the operating unit and a remote control (the remote control 27 described in Embodiment 4). Note that with regard to notifications, the same applies to embodiments described below.

When the running of the air conditioning device is started on the basis of a user operation or another factor, the indoor air-sending fan 7f is controlled to a certain rotational speed by the controller 30. In the case where the rotational speed of the indoor air-sending fan 7f becomes equal to or greater than a preset threshold value R1, the controller 30 causes the state of the air conditioning device to transition from the normal state A to the normal state B. The normal state B is also a state in which a leakage of refrigerant is detectable by the refrigerant detector 99. However, in the normal state B, the controller 30 disregards the detection signal from the refrigerant detector 99, even if the controller 30 detects a leakage of refrigerant on the basis of the detection signal from the refrigerant detector 99. In other words, in the normal state B, the controller 30 issues no notification that refrigerant has leaked.

In the normal state B, in the case where the rotational speed of the indoor air-sending fan 7f becomes less than the threshold value R1, the controller 30 causes the state of the air conditioning device to transition back from the normal state B to the normal state A.

When Rmax is referred to as the maximum rotational speed and Rmin is referred to as the minimum rotational speed of the indoor air-sending fan 7f during normal running, the threshold value R1 is set, for example, within a rotational speed range from 0 to Rmax (0 ≤ R1 ≤ Rmax), more preferably within a rotational speed range that is greater than 0 and less than or equal to Rmax (0 < R1 ≤ Rmax), and even more preferably within a rotational speed range that is greater than Rmin and less than or equal to Rmax (Rmin < R1 < Rmax). In the case where a flammable refrigerant is used, the threshold value R1 desirably is set to at least a rotational speed at which a flammable concentration zone is not imposed indoors even if the amount of refrigerant leakage in the indoor space is a maximum. The threshold value R1 is set in anticipation of control tolerances. Also, in the case where the rotational speed of the indoor air-sending fan 7f fluctuates depending on the load on the motor, the threshold value R1 is set in consideration of the maximum load.

The refrigerant detector 99 is a gas sensor such as a semiconductor gas sensor, and has a feature of reacting to hydrogen, carbon, or other substances in the atmosphere. In contrast, in Embodiment 1, in the normal state B in which the rotational speed of the indoor air-sending fan 7f is equal to or greater than the threshold value R1, the detection signal from the refrigerant detector 99 is disregarded. In other words, in the normal state B, as the indoor air-sending fan 7f is rotating at a rotational speed equal to or greater than the threshold value R1, a flammable zone cannot be imposed. For this reason, in Embodiment 1, under the condition of the normal state B, the detection signal from the refrigerant detector 99 is disregarded, and incorrect detection by the refrigerant detector 99 is prevented. Hypothetically, even if a leakage of refrigerant occurs in the normal state B, the detection signal from the refrigerant detector 99 is disregarded, but as the indoor air-sending fan 7f is rotating at a rotational speed equal to or greater than the threshold value R1 in the normal state B, it is possible to diffuse the leaking refrigerant indoors.

Note that in the case where refrigerant leaks in the normal state A, the leakage of refrigerant is detected, and the indoor air-sending fan 7f is made to run.

As above, in Embodiment 1, even in the case where refrigerant leaks in either state of the normal state A and the normal state B, it is possible to make the indoor air-sending fan 7f run reliably. Consequently, according to Embodiment 1, even in the unlikely case that refrigerant leaks, it is possible to inhibit local increases in the refrigerant concentration. Consequently, even in the case where a flammable refrigerant is used for example, a safer air conditioning device can be provided.

### Embodiment 2

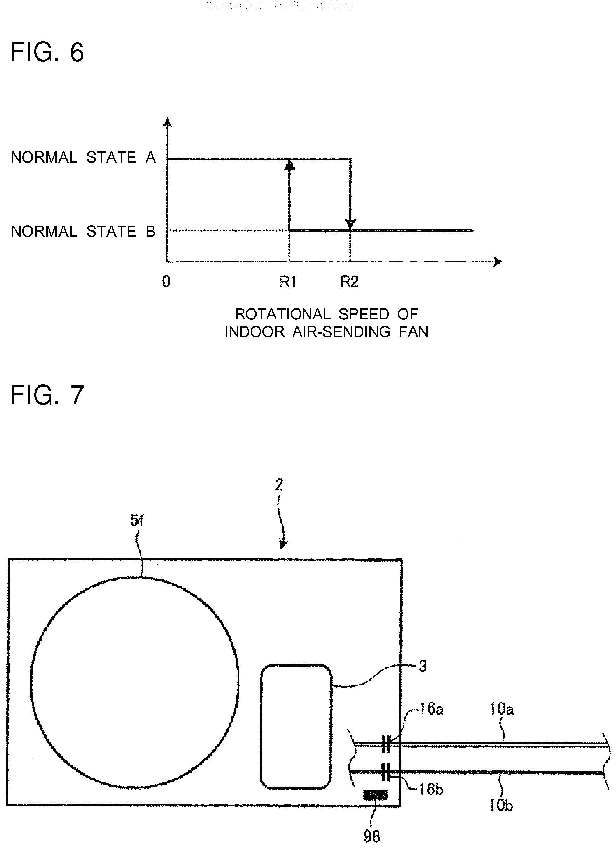

A refrigeration cycle device according to Embodiment 2 of the present invention will be described. In Embodiment 2, an air conditioning device is illustrated as one example of a refrigeration cycle device. Note that as the basic configuration of the air conditioning device according to Embodiment 2 is similar to that of Embodiment 1 described above, a description will be omitted. Fig. 6 is a diagram illustrating the relationship between the rotational speed of the indoor air-sending fan 7f and the states of the air conditioning device in an air conditioning device according to Embodiment 2. In Fig. 6, the horizontal axis represents the rotational speed of the indoor air-sending fan 7f, while the vertical axis represents the state of the air conditioning device. As illustrated in Fig. 6, between the threshold value R1 at which the air conditioning device transitions from the normal state B to the normal state A and a threshold value R2 at which the air conditioning device transitions from the normal state A to the normal state B, a differential that serves as a dead zone of control is set. Herein, the threshold value R2 is a value that is greater than the threshold value R1 (R2 > R1). The threshold values R1 and R2 are set, for example, within a rotational speed range from 0 to Rmax (0 ≤ R1 < R2 < Rmax), more preferably within a rotational speed range that is greater than 0 and less than or equal to Rmax (0 < R1 < R2 ≤ Rmax), and even more preferably within a rotational speed range that is greater than Rmin and less than or equal to Rmax (Rmin < R1 < R2 ≤ Rmax).

In the case where the air conditioning device is in the normal state A, when the rotational speed of the indoor air-sending fan 7f becomes equal to or greater than the threshold value R2, the air conditioning device transitions from the normal state A to the normal state B. On the other hand, in the case where the air conditioning device is in the normal state B, when the rotational speed of the indoor air-sending fan 7f becomes less than the threshold value R1, the air conditioning device transitions from the normal state B to the normal state A. Similarly to Embodiment 1 described above, in the normal state A, a notification about a leakage of refrigerant is issued, whereas in the normal state B, no notification about a leakage of refrigerant is issued.

In Embodiment 1 described above, in the case where the indoor air-sending fan 7f is running at a rotational speed close to the threshold value R1, there is a possibility that the normal state A and the normal state B are switched frequently. In contrast, in Embodiment 2, the differential is set between the threshold value R2 at which the air conditioning device transitions from the normal state A to the normal state B and the threshold value R1 at which the air conditioning device transitions from the normal state B to the normal state A. For this reason, according to Embodiment 2, it is possible to prevent frequent switching between the normal state A and the normal state B.

As described above, the air conditioning device according to Embodiments 1 and 2 described above includes the refrigerant circuit 40 that causes refrigerant to circulate, the indoor unit 1 that houses the load side heat exchanger 7 of the refrigerant circuit 40 and that is installed indoors, and the controller 30 that controls the indoor unit 1, in which the indoor unit 1 is provided with the indoor air-sending fan 7f and the refrigerant detector 99. When the controller 30 detects a leakage of refrigerant on the basis of the detection signal from the refrigerant detector 99, the controller 30 is configured to cause the indoor air-sending fan 7f to run, and when the rotational speed of the indoor air-sending fan 7f is equal to or greater than a first threshold value (for example, the threshold value R1 in Embodiment 1, or the threshold value R2 in Embodiment 2), the controller 30 is configured to disregard the detection signal from the refrigerant detector 99, even if the controller 30 detects a leakage of refrigerant on the basis of the detection signal from the refrigerant detector 99.

With this configuration, under the condition of the normal state B, as the detection signal from the refrigerant detector 99 is disregarded, it is possible to prevent incorrect detection by the refrigerant detector 99.

Also, in the air conditioning device according to Embodiments 1 and 2 described above, in the normal state B, in the case where the rotational speed of the indoor air-sending fan 7f becomes less than a second threshold value (for example, the threshold value R1 in Embodiments 1 and 2), the controller 30 is configured to issue a notification about the leakage of refrigerant. The second threshold value may be equal to or less than the first threshold value.

### Embodiment 3

A refrigeration cycle device according to Embodiment 3 of the present invention will be described. In Embodiment 3, an air conditioning device is illustrated as one example of a refrigeration cycle device. Fig. 7 is a diagram schematically illustrating the configuration of the outdoor unit 2 (one example of a heat exchanger unit) of the air conditioning device according to Embodiment 3. As described earlier, the outdoor unit 2 houses the compressor 3, the refrigerant channel switching device 4, the heat source side heat exchanger 5, the pressure-reducing device 6, the outdoor air-sending fan 5f, and other devices, for example. Of these devices, the compressor 3 and the outdoor air-sending fan 5f are illustrated in Fig. 7. The rotational speed of the outdoor air-sending fan 5f is set variably in multiple stages (for example, two or more stages) or is set variably and continuously, through control by the controller 30. Also, the extension pipes 10a and 10b are connected to the outdoor unit 2. The extension pipes 10a and 10b are connected to refrigerant pipes inside the outdoor unit 2 via fitting sections 16a and 16b (for example, flare fittings). The fitting sections 16a and 16b are disposed inside the outdoor unit 2. The fitting sections 16a and 16b may also be disposed outside the outdoor unit 2.

The outdoor unit 2 (one example of a heat exchanger unit) according to Embodiment 3 is provided with a refrigerant detector 98. The refrigerant detector 98 is disposed inside the outdoor unit 2 and below the fitting sections 16a and 16b, for example. The refrigerant detector 98 may also be disposed below the brazing portion of the heat source side heat exchanger 5. For the refrigerant detector 98, an electrical gas sensor such as a semiconductor gas sensor and a hot wire semiconductor gas sensor is used, for example. For example, the refrigerant detector 98 detects the refrigerant concentration in the air surrounding the refrigerant detector 98, and outputs a detection signal to the controller 30. In the controller 30, the presence or absence of refrigerant leakage is determined on the basis of the detection signal from the refrigerant detector 98.

The refrigerant leakage detection process according to Embodiment 3 executed by the controller 30 is obtained by substituting "refrigerant detector 99" with "refrigerant detector 98" and "indoor air-sending fan 7f" with "outdoor air-sending fan 5f" in the refrigerant leakage detection process of either Embodiment 1 or 2 described using Figs. 4 to 6, for example. In other words, in the refrigerant leakage detection process according to Embodiment 3, in the case where a leakage of refrigerant is detected by the detection signal from the refrigerant detector 98, the running of the outdoor air-sending fan 5f is started. For this reason, it is possible to diffuse leaking refrigerant in the installation space of the outdoor unit 2 (such as an outdoor space and a machine room space) Consequently, according to Embodiment 3, even in the unlikely case that refrigerant leaks in the outdoor unit 2, it is possible to inhibit local increases in the refrigerant concentration in the installation space of the outdoor unit 2.

Also, in Embodiment 3, in a normal state B, in which the rotational speed of the outdoor air-sending fan 5f is equal to or greater than the threshold value R1, the controller 30 is configured to disregard the detection signal from the refrigerant detector 98, even if the controller 30 detects a leakage of refrigerant on the basis of the detection signal from the refrigerant detector 98. With this action, under the condition of the normal state B, it is possible to prevent incorrect detection by the refrigerant detector 98. Hypothetically, even if a leakage of refrigerant occurs in the normal state B, the detection signal from the refrigerant detector 98 is disregarded, but as the outdoor air-sending fan 5f is rotating at a rotational speed equal to or greater than the threshold value R1 in the normal state B, it is possible to diffuse the leaking refrigerant in the installation space of the outdoor unit 2.

### Embodiment 4

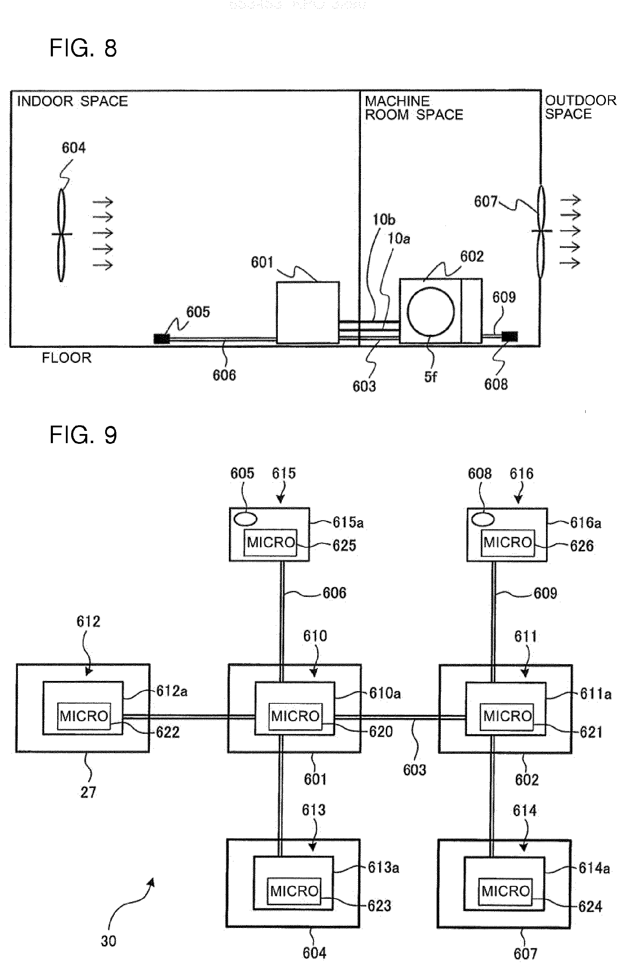

A refrigeration cycle system according to Embodiment 4 of the present invention will be described. Fig. 8 is a diagram illustrating a schematic overall configuration of a refrigeration cycle system according to Embodiment 4. In Embodiment 4, a separated showcase is illustrated as an example of the refrigeration cycle device included in the refrigeration cycle system. As illustrated in Fig. 8, the showcase includes, for example, an indoor unit 601 (one example of a load unit and also one example of a heat exchanger unit) installed in an indoor space such as inside a shop, and an outdoor unit 602 (one example of a heat source unit and also one example of a heat exchanger unit) installed in a machine room space, for example. The indoor unit 601 and the outdoor unit 602 are connected via the extension pipes 10a and 10b. In the indoor unit 601 of the present example, an air-sending fan that works to stir air in the installation space is not provided. In the outdoor unit 602, the outdoor air-sending fan 5f is provided.

Although illustration is omitted in Fig. 8, the controller 30 includes an indoor unit controller provided in the indoor unit 601 and an outdoor unit controller provided in the outdoor unit 602 and capable of communication with the indoor unit controller. The indoor unit controller and the outdoor unit controller are connected via a control wire 603.

In the indoor space, an air-sending fan 604 that stirs air in the indoor space is provided separately from the showcase. The air-sending fan 604 is provided outside of the housing of the indoor unit 601 of the showcase. The air-sending fan 604 is able to work independently of the showcase, for example. The air-sending fan 604 is connected to the controller 30 (for example, the indoor unit controller) via a control wire not illustrated. The rotational speed of the air-sending fan 604 is set variably in multiple stages (for example, two or more stages) or is set variably and continuously, through control by the controller 30. In the case where refrigerant leaks into the indoor space, when the air-sending fan 604 operates, the air in the indoor space is mixed together with the leaking refrigerant. With this action, as the leaking refrigerant is diffused in the indoor space, local increases in the refrigerant concentration in the indoor space are inhibited. In other words, the air-sending fan 604 serves as a leaking refrigerant diluter that dilutes the refrigerant leaking into the indoor space.

Also, in the indoor space, a refrigerant detector 605 that detects refrigerant is provided separately from the showcase. The refrigerant detector 605 is provided outside of the housing of the indoor unit 601 of the showcase. As the refrigerant is denser than air under atmospheric pressure, the refrigerant detector 605 is provided close to the floor of the indoor space, for example. The refrigerant detector 605 is connected to the controller 30 (for example, the indoor unit controller) via a communication wire 606. For the refrigerant detector 605, an electrical gas sensor such as a semiconductor gas sensor and a hot wire semiconductor gas sensor is used, for example. The refrigerant detector 605 detects the refrigerant concentration in the air surrounding the refrigerant detector 605, and outputs a detection signal to the controller 30. In the controller 30, the presence or absence of refrigerant leakage is determined on the basis of the detection signal from the refrigerant detector 605.

Similarly to Embodiment 1, in the normal state A, when the controller 30 detects a leakage of refrigerant on the basis of the detection signal from the refrigerant detector 605, the controller 30 is configured to cause the air-sending fan 604 to run and to issue a notification about the leakage of refrigerant. Also, in the normal state B, the controller 30 is configured to disregard the detection signal from the refrigerant detector 605, even if the controller 30 detects a leakage of refrigerant on the basis of the detection signal from the refrigerant detector 605. For example, in the case where a flammable refrigerant is used, the threshold value R1 desirably is set to at least a rotational speed at which a flammable concentration zone is not imposed in the indoor space even if the amount of refrigerant leaking into the indoor space is a maximum. Also, similarly to Embodiment 2, a differential may be set between the threshold value R1 at which the air conditioning device transitions from the normal state B to the normal state A and the threshold value R2 at which the air conditioning device transitions from the normal state A to the normal state B.

In the machine room space, an air-sending fan 607 for ventilation that exhausts the air of the machine room space into an outdoor space is provided separately from the showcase. The air-sending fan 607 is provided outside of the housing of the outdoor unit 602 of the showcase (for example, in a wall facing the outdoor space from among the walls of the machine room space). The air-sending fan 607 is able to work independently of the showcase, for example. The air-sending fan 607 is connected to the controller 30 (for example, the outdoor unit controller) via a control wire not illustrated. The rotational speed of the air-sending fan 607 is set variably in multiple stages (for example, two or more stages) or is set variably and continuously, through control by the controller 30. In the case where refrigerant leaks into the machine room space, when the air-sending fan 607 operates, the air in the machine room space is exhausted into the outdoor space together with the leaking refrigerant. With this action, as the leaking refrigerant is exhausted into the outdoor space, local increases in the refrigerant concentration in the machine room space are inhibited. In other words, the air-sending fan 607 serves as a leaking refrigerant diluter that dilutes the refrigerant leaking into the machine room space.

Also, in the machine room space, a refrigerant detector 608 that detects refrigerant is provided separately from the showcase. The refrigerant detector 608 is provided outside of the housing of the outdoor unit 602 of the showcase, for example. As the refrigerant is denser than air under atmospheric pressure, the refrigerant detector 608 is provided close to the floor of the machine room space. The refrigerant detector 608 is connected to the controller 30 (for example, the outdoor unit controller) via a communication wire 609. For the refrigerant detector 608, an electrical gas sensor such as a semiconductor gas sensor and a hot wire semiconductor gas sensor is used, for example. The refrigerant detector 608 detects the refrigerant concentration in the air surrounding the refrigerant detector 608, and outputs a detection signal to the controller 30. In the controller 30, the presence or absence of refrigerant leakage is determined on the basis of the detection signal from the refrigerant detector 608.

Similarly to Embodiment 1, in the normal state A, when the controller 30 detects a leakage of refrigerant on the basis of the detection signal from the refrigerant detector 608, the controller 30 is configured to cause the air-sending fan 607 to run and to issue a notification about the leakage of refrigerant. Also, in the normal state B, the controller 30 is configured to disregard the detection signal from the refrigerant detector 608, even if the controller 30 detects a leakage of refrigerant on the basis of the detection signal from the refrigerant detector 608. For example, in the case where a flammable refrigerant is used, the threshold value R1 desirably is set to at least a rotational speed at which a flammable concentration zone is not imposed in the machine room space even if the amount of refrigerant leaking into the machine room space is a maximum. Also, similarly to Embodiment 2, a differential may be set between the threshold value R1 at which the air conditioning device transitions from the normal state B to the normal state A and the threshold value R2 at which the air conditioning device transitions from the normal state A to the normal state B.

Fig. 9 is a block diagram illustrating a configuration of the controller 30 of the refrigeration cycle system according to Embodiment 4. As illustrated in Fig. 9, the controller 30 includes an indoor unit controller 610 that is installed in the indoor unit 601 and that controls the indoor unit 601, an outdoor unit controller 611 that is installed in the outdoor unit 602 and that controls the outdoor unit 602, and a remote control controller 612 that is installed in the remote control 27 (for example, an operating unit provided on the indoor unit 601) and that controls the remote control 27.

The indoor unit controller 610 is communicably connected to the outdoor unit controller 611 and the remote control controller 612 via each control wire. The indoor unit controller 610 includes a control board 610a. A microcomputer 620 is mounted on the control board 610a.

The outdoor unit controller 611 includes a control board 611a. A microcomputer 621 is mounted on the control board 611a.

The remote control controller 612 includes a control board 612a. A microcomputer 622 is mounted on the control board 612a.

Also, the air-sending fan 604 of the present example is equipped with an air-sending fan controller 613 that controls the air-sending fan 604. The air-sending fan 607 of the present example is equipped with an air-sending fan controller 614 that controls the air-sending fan 607.

The air-sending fan controller 613 is communicably connected to the indoor unit controller 610 via a control wire. The air-sending fan controller 613 includes a control board 613a. A microcomputer 623 is mounted on the control board 613a.

The air-sending fan controller 614 is communicably connected to the outdoor unit controller 611 via a control wire. The air-sending fan controller 614 includes a control board 614a. A microcomputer 624 is mounted on the control board 614a.

Also, the controller 30 includes a sensor controller 615 that controls the refrigerant detector 605 and a sensor controller 616 that controls the refrigerant detector 608.

The sensor controller 615 is communicably connected to the indoor unit controller 610. The sensor controller 615 includes a control board 615a. Each of a microcomputer 625 and the refrigerant detector 605 is permanently mounted on the control board 615a. The refrigerant detector 605 of the present example is mounted directly onto the control board 615a, but it is sufficient for the refrigerant detector 605 to be permanently connected to the control board 615a. For example, the refrigerant detector 605 may be provided at a position distanced from the control board 615a, and wires from the refrigerant detector 605 may be connected to the control board 615a by soldering or another method. Also, in the present example, the control board 615a is provided separately from the control board 610a, but the control board 615a may be omitted, and the refrigerant detector 605 may be permanently connected to the control board 610a.

The sensor controller 616 is communicably connected to the outdoor unit controller 611. The sensor controller 616 includes a control board 616a. Each of a microcomputer 626 and the refrigerant detector 608 is permanently mounted on the control board 616a. The refrigerant detector 608 of the present example is mounted directly onto the control board 616a, but it is sufficient for the refrigerant detector 608 to be permanently connected to the control board 616a. For example, the refrigerant detector 608 may be provided at a position distanced from the control board 616a, and wires from the refrigerant detector 608 may be connected to the control board 616a by soldering or another method. Also, in the present example, the control board 616a is provided separately from the control board 611a, but the control board 616a may be omitted, and the refrigerant detector 608 may be permanently connected to the control board 611a.

Each of the microcomputer 625 of the sensor controller 615 and the microcomputer 626 of the sensor controller 616 has a rewritable non-volatile memory. Each non-volatile memory is provided with a leakage history bit (one example of a leakage history storage area) with which a history of refrigerant leakage is stored. It is possible to set the leakage history to "0" or "1". The value "0" of the leakage history bit represents a state with no refrigerant leakage history, while "1" represents a state with a refrigerant leakage history. The initial value of the leakage history bit is "0". In other words, in the case of microcomputers 625 and 626 in a new state or microcomputers 625 and 626 with no refrigerant leakage history, each leakage history bit is set to "0". In the case where a leakage of refrigerant is detected by the refrigerant detector 605, the leakage history bit of the microcomputer 625 is rewritten from "0" to "1". In the case where a leakage of refrigerant is detected by the refrigerant detector 608, the leakage history bit of the microcomputer 626 is rewritten from "0" to "1". The leakage history bits of the microcomputers 625 and 626 are both irreversibly rewritable in only one direction from "0" to "1". Also, the leakage history bits of the microcomputers 625 and 626 are maintained regardless of whether or not power is supplied to the microcomputers 625 and 626.

Each memory of the microcomputers 620, 621, and 622 of the corresponding one of the indoor unit 601, the outdoor unit 602, and the remote control 27 is provided with a first leakage history bit that corresponds to the leakage history bit of the microcomputer 625 and a second leakage history bit that corresponds to the leakage history bit of the microcomputer 626. These leakage history bits may be set to "0" or "1", and are bidirectionally rewritable between "0" and "1". The value of the first leakage history bit of each of the microcomputers 620, 621, and 622 is set to the same value as the leakage history bit of the microcomputer 625 acquired by communication. The value of the second leakage history bit of each of the microcomputers 620, 621, and 622 is set to the same value as the leakage history bit of the microcomputer 626 acquired by communication. Even if the first leakage history bit and the second leakage bit of the microcomputers 620, 621, and 622 are reverted to an initial value ("0" for example) when the supply of power is cut off, the first and second leakage history bits are set back to the same values as the leakage history bits of the microcomputers 625 and 626 when the supply of power is resumed.

The indoor unit controller 610 executes a normal control of the indoor unit 601 when the first leakage history bit and the second leakage history bit of the microcomputer 620 are both set to "0". The indoor unit 601 in this state executes normal running action and stopping action on the basis of operations on the remote control 27 or another device. When the first leakage history bit of the microcomputer 620 is set to "1", the indoor unit controller 610 executes a control via the air-sending fan controller 613 that forcibly causes the air-sending fan 604 to run, for example.

The outdoor unit controller 611 executes a normal control of the outdoor unit 602 when the first leakage history bit and the second leakage history bit of the microcomputer 621 are both set to "0". When the first leakage history bit or the second leakage history bit of the microcomputer 621 is set to "1", the outdoor unit controller 611 executes a control that causes the compressor 3 to stop, for example. The compressor 3 remains stopped as long as the first leakage history bit or the second leakage history bit of the microcomputer 621 is still set to "1". Also, when the second leakage history bit of the microcomputer 621 is set to "1", the outdoor unit controller 611 executes a control via the air-sending fan controller 614 that forcibly causes the air-sending fan 607 to run, for example. At this time, the outdoor unit controller 611 additionally may execute a control that forcibly causes the outdoor air-sending fan 5f to run.

The remote control controller 612 executes a normal control of the remote control 27 when the first leakage history bit and the second leakage history bit of the microcomputer 622 are both set to "0". When the first leakage history bit or the second leakage history bit of the microcomputer 622 is set to "1", the remote control controller 612 displays information including the type of abnormality or a troubleshooting method on a display provided in the remote control 27, for example. At this time, the remote control controller 612 may also display information about the refrigerant leakage location on the display, on the basis of which one of the first leakage history bit and the second leakage history bit is set to "1". For example, in the case where the first leakage history bit is set to "1", information representing that a leakage of refrigerant has occurred in the indoor unit 601 is displayed, whereas in the case where the second leakage history bit is set to "1", information representing that a leakage of refrigerant has occurred in the outdoor unit 602 is displayed. Additionally, the remote control controller 612 may also cause a sound output unit provided in the remote control 27 to issue a notification by sound of information about the type of abnormality, a troubleshooting method, or the refrigerant leakage location.

According to Embodiment 4, a leakage history of refrigerant is irreversibly written to the non-volatile memory of the control boards 615a and 616a. To reset the leakage history of refrigerant, it is necessary to replace the control board 615a or 616a with a control board having no leakage history. When the control boards 615a and 616a are replaced, the permanently connected refrigerant detectors 605 and 608 are also replaced. Consequently, it is possible to prevent continued use of the refrigerant detectors 605 and 608 whose detection characteristics have changed due to being exposed to a refrigerant environment. Also, in Embodiment 4, as the running of the showcase cannot be resumed unless the control boards 615a and 616a are replaced, it is possible to prevent the running of a showcase having a location of the refrigerant leakage yet to be repaired from being resumed due to human error or on purpose.

Also, in Embodiment 4, in the normal state B in which the rotational speed of the air-sending fan 604 is equal to or greater than the threshold value R1, the controller 30 is configured to disregard the detection signal from the refrigerant detector 605, even if the controller 30 detects a leakage of refrigerant on the basis of the detection signal from the refrigerant detector 605. With this action, under the condition of the normal state B, it is possible to prevent incorrect detection by the refrigerant detector 605. Hypothetically, even if a leakage of refrigerant occurs in the normal state B, the detection signal from the refrigerant detector 605 is disregarded, but as the air-sending fan 604 is rotating at a rotational speed equal to or greater than the threshold value R1 in the normal state B, it is possible to diffuse the leaking refrigerant in the indoor space.

Also, in Embodiment 4, in the normal state B in which the rotational speed of the air-sending fan 607 is equal to or greater than the threshold value R1, the controller 30 is configured to disregard the detection signal from the refrigerant detector 608, even if the controller 30 detects a leakage of refrigerant on the basis of the detection signal from the refrigerant detector 608. With this action, under the condition of the normal state B, it is possible to prevent incorrect detection by the refrigerant detector 608. Hypothetically, even if a leakage of refrigerant occurs in the normal state B, the detection signal from the refrigerant detector 608 is disregarded, but as the air-sending fan 607 is rotating at a rotational speed equal to or greater than the threshold value R1 in the normal state B, it is possible to exhaust the refrigerant leaking into the machine room space to the outdoor space.

Note that in Embodiment 4, the first leakage history bit and the second leakage history bit are provided only in the memory of each of the microcomputers 620, 621, and 622 of the corresponding one of the indoor unit 601, the outdoor unit 602, and the remote control 27, but the first leakage history bit and the second leakage history bit may also be provided in the memory of each of the microcomputer 623 of the air-sending fan 604 and the microcomputer 624 of the air-sending fan 607.

Also, in Embodiment 4, as the air-sending fan 604 includes the air-sending fan controller 613 and the air-sending fan 607 includes the air-sending fan controller 614, the air-sending fan 604 is connected to the indoor unit 601 via a control wire and the air-sending fan 607 is connected to the outdoor unit 602 via a control wire. However, it is not strictly necessary for the air-sending fans 604 and 607 to include controllers. In the case where the air-sending fans 604 and 607 do not include controllers, for example, the air-sending fan 604 is connected to the indoor unit 601 via a power wire and the air-sending fan 607 is connected to the outdoor unit 602 via a power wire. In this case, control of the running and stopping of the air-sending fan 604 is executed by relay control in the control board 610a of the indoor unit controller 610, and control of the running and stopping of the air-sending fan 607 is executed by relay control in the control board 611a of the outdoor unit controller 611.

Also, in Embodiment 4, a leakage history bit with which the presence or absence of a leakage history with a single bit is stored is illustrated as an example of a leakage history storage area provided in non-volatile memory, but the configuration is not limited to this illustration. For example, a leakage history storage area of 2 bits or more may also be provided in the non-volatile memory. In the leakage history storage area, one of either first information representing a state with no refrigerant leakage history and second information representing a state with refrigerant leakage history is selectively stored. Also, the information stored in the leakage history storage area is changeable in only one direction from the first information to the second information. When the controller 30 (for example, the sensor controller 615 or 616) detects a leakage of refrigerant, the controller 30 is configured to change the information stored in the leakage history storage area from the first information to the second information.

As described in Embodiment 4, it is not strictly necessary for the refrigerant detector and the air-sending fan to be built into the housing of the indoor unit or the outdoor unit of the refrigeration cycle device. The refrigerant detector and the air-sending fan may also be provided separately from the refrigeration cycle device when the refrigerant detector and the air-sending fan are communicably connected to the refrigeration cycle device via control wires or another element, or remotely operably connected to the refrigeration cycle device via power wires.

Also, as described in Embodiment 4, in the case where a refrigerant detector and an air-sending fan are installed in each of the installation location of the indoor unit and the installation location of the outdoor unit, it is sufficient to run only the air-sending fan in the space where a leakage of refrigerant is detected. In other words, in the case where a leakage of refrigerant is detected by the refrigerant detector provided in the installation location of the indoor unit, it is sufficient to run only the air-sending fan provided in the installation location of the indoor unit. In the case where a leakage of refrigerant is detected by the refrigerant detector provided in the installation location of the outdoor unit, it is sufficient to run only the air-sending fan provided in the installation location of the outdoor unit.

Also, in Embodiment 4, the air-sending fan 604 that stirs the air in the indoor space is provided in the indoor space and the air-sending fan 607 that exhausts the air in the machine room space into the outdoor space is provided in the machine room space, but the configuration is not limited to this description. For example, an air-sending fan for ventilation that exhausts air in the indoor space into the outdoor space may also be provided in the indoor space, and an air-sending fan that stirs the air in the machine room space may also be provided in the machine room space.

As described above, the refrigeration cycle device according to an embodiment described above is provided with the refrigerant circuit 40 that causes refrigerant to circulate, heat exchanger units (for example, the indoor unit 1 and the outdoor unit 2) that house the heat exchangers (for example, the load side heat exchanger 7 and the heat source side heat exchanger 5) of the refrigerant circuit 40, and the controller 30 that controls the heat exchanger units. Each heat exchanger unit includes an air-sending fan (for example, the indoor air-sending fan 7f and the outdoor air-sending fan 5f) and a refrigerant detector (for example, the refrigerant detectors 98 and 99). The controller 30 is configured to cause the air-sending fan to run when the controller 30 detects a leakage of refrigerant on the basis of the detection signal from the refrigerant detector. When the rotational speed of the air-sending fan is equal to or greater than a first threshold value (for example, the threshold value R1 of Embodiment 1 or the threshold value R2 of Embodiment 2), the controller 30 is configured to disregard the detection signal from the refrigerant detector, even if the controller 30 detects a leakage of refrigerant on the basis of the detection signal from the refrigerant detector.

With this configuration, under the condition of the normal state B, as the detection signal from the refrigerant detector is disregarded, it is possible to prevent incorrect detection by the refrigerant detector.

Also, in the refrigeration cycle device according to an embodiment described above, in the normal state B, in the case where the rotational speed of the air-sending fan becomes less than a second threshold value (for example, the threshold value R1 in Embodiments 1 and 2), the controller 30 is configured to issue a notification about the leakage of refrigerant. The second threshold value may be equal to or less than the first threshold value.

Also, in the refrigeration cycle device according to an embodiment described above, the heat exchanger may be the load side heat exchanger 7 or the heat source side heat exchanger 5 of the refrigerant circuit 40.

Also, the refrigeration cycle system according to an embodiment described above is provided with a refrigeration cycle device including the refrigerant circuit 40 that causes refrigerant to circulate and the controller 30 that controls the refrigerant circuit 40, air-sending fans (for example, the air-sending fans 604 and 607) controlled by the controller 30, and refrigerant detectors (for example, the refrigerant detectors 605 and 608) that detect refrigerant and output a detection signal to the controller 30. The controller 30 is configured to cause the air-sending fan to run when the controller 30 detects a leakage of refrigerant on the basis of the detection signal from the refrigerant detector. When the rotational speed of the air-sending fan is equal to or greater than a first threshold value (for example, the threshold value R1 of Embodiment 1 or the threshold value R2 of Embodiment 2), the controller 30 is configured to disregard the detection signal from the refrigerant detector, even if the controller 30 detects a leakage of refrigerant on the basis of the detection signal from the refrigerant detector.

With this configuration, under the condition of the normal state B, as the detection signal from the refrigerant detector is disregarded, it is possible to prevent incorrect detection by the refrigerant detector.

Also, in the refrigeration cycle system according to an embodiment described above, in the normal state B, in the case where the rotational speed of the air-sending fan becomes less than a second threshold value (for example, the threshold value R1 in Embodiments 1 and 2), the controller 30 is configured to issue a notification about the leakage of refrigerant. The second threshold value may be equal to or less than the first threshold value.

### Other embodiments

The present invention is not limited to Embodiments 1 to 4 described above, and various modifications are possible.

For example, an embodiment described above gives a floor-mounted indoor unit as an example of the indoor unit 1, but the present invention is also applicable to other indoor units, such as a ceiling cassette type, a ceiling-embedded type, a hanging type, and a wall-mounted type.

Also, an embodiment described above gives an air conditioning device or a showcase as an example of the refrigeration cycle device, but the present invention is also applicable to other refrigeration cycle devices, such as a heat pump water heater (for example, the heat pump device described in Japanese Unexamined Patent Application Publication No. 2016-3783) and a chiller that is often installed in a machine room.

Also, an embodiment described above gives a semiconductor gas sensor or a hot wire semiconductor gas sensor as an example of the refrigerant detector, but the configuration is not limited to this example. Another refrigerant detector, such as an infrared detector, may be used.

Also, each of Embodiments 1 to 4 described above and their modifications may also be made in combination with each other.

### Reference Signs List

1 indoor unit 2 outdoor unit 3 compressor 4 refrigerant channel switching device 5 heat source side heat exchanger 5f outdoor air-sending fan 6 pressure-reducing device 7 load side heat exchanger 7f indoor air-sending fan 9a, 9b indoor pipe 10a, 10b extension pipe 11 suction pipe 12 discharge pipe 13a, 13b extension pipe connecting valve 14a, 14b, 14c service port 15a, 15b, 16a, 16b fitting section 20 partition 20a air duct opening 25 electrical component box 27 remote control 30 controller 40 refrigerant circuit 81 air duct 91 suction air temperature sensor 92 heat exchanger inlet temperature sensor 93 heat exchanger temperature sensor 98, 99 refrigerant detector 107 impeller 108 fan casing 108a air outlet opening 108b air inlet opening 111 housing 112 air inlet 113 air outlet 114a first front panel 114b second front panel 114c third front panel 115a, 115b space 601 indoor unit 602 outdoor unit 603 control wire 604 air-sending fan 605 refrigerant detector 606 communication wire 607 air-sending fan 608 refrigerant detector 609 communication wire 610 indoor unit controller 610a control board 611 outdoor unit controller 611a control board 612 remote control controller 612a control board 613, 614 air-sending fan controller 613a, 614a control board 615, 616 sensor controller 615a, 616a control board 620, 621, 622, 623, 624, 625, 626 microcomputer

## Claims

1. A refrigeration cycle device, comprising:
a refrigerant circuit (40) configured to cause refrigerant to circulate;
a heat exchanger unit (1, 2) that houses a heat exchanger of the refrigerant circuit (40); and
a controller (30) configured to control the heat exchanger unit (1, 2),
the heat exchanger unit (1, 2) being provided with an air-sending fan (5f, 7f) and an electrical refrigerant detector (98, 99),
the controller (30) being configured to cause the air-sending fan (5f, 7f) to run,
**characterized in that** the controller (30) is configured to disregard a detection signal from the refrigerant detector (98, 99) when a rotational speed of the air-sending fan (5f, 7f) is equal to or greater than a first threshold value, even if the controller (30) detects a leakage of refrigerant on a basis of the detection signal from the refrigerant detector (98, 99).

2. The refrigeration cycle device of claim 1, wherein the controller (30) is configured to issue a notification about the leakage of refrigerant when the controller (30) causes the air-sending fan (5f, 7f) to run at a rotational speed less than the first threshold value and the controller (30) detects the leakage of refrigerant on a basis of the detection signal from the refrigerant detector (98, 99).

3. The refrigeration cycle device of claim 2, wherein,
in a state in which the controller (30) is configured to issue no notification about the leakage of refrigerant even if the controller (30) detects the leakage of refrigerant on a basis of the detection signal from the refrigerant detector (98, 99) when a rotational speed of the air-sending fan (5f, 7f) is equal to or greater than the first threshold value, the controller (30) is configured to issue the notification about the leakage of refrigerant when the rotational speed of the air-sending fan (5f, 7f) becomes less than a second threshold value, and
the second threshold value is equal to or less than the first threshold value.

4. The refrigeration cycle device of any one of claims 1 to 3, wherein the heat exchanger is a load side heat exchanger (7) of the refrigerant circuit (40).

5. The refrigeration cycle device of any one of claims 1 to 3, wherein the heat exchanger is a heat source side heat exchanger (5) of the refrigerant circuit (40).

6. A refrigeration cycle system, comprising:
a refrigeration cycle device including a refrigerant circuit (40) configured to cause refrigerant to circulate and a controller (30) configured to control the refrigerant circuit (40);
an air-sending fan (604, 607) controlled by the controller (30); and
an electrical refrigerant detector (605, 608) configured to output a detection signal to the controller (30),
the controller (30) being configured to cause the air-sending fan (604, 607) to run,
**characterized in that** the controller (30) is configured to disregard the detection signal from the refrigerant detector (605, 608) when a rotational speed of the air-sending fan (604, 607) is equal to or greater than a first threshold value, even if the controller (30) detects a leakage of refrigerant on a basis of the detection signal from the refrigerant detector (605, 608).

7. The refrigeration cycle system of claim 6, wherein the controller (30) is configured to issue a notification about the leakage of refrigerant when the controller (30) causes the air-sending fan (604, 607) to run at a rotational speed less than the first threshold value and the controller (30) detects the leakage of refrigerant on a basis of the detection signal from the refrigerant detector (605, 608).

8. The refrigeration cycle system of claim 7, wherein,
in a state in which the controller (30) is configured to issue no notification about the leakage of refrigerant even if the controller (30) detects the leakage of refrigerant on a basis of the detection signal from the refrigerant detector (605, 608) when a rotational speed of the air-sending fan (604, 607) is equal to or greater than the first threshold value, the controller (30) is configured to issue the notification about the leakage of refrigerant when the rotational speed of the air-sending fan (604, 607) becomes less than a second threshold value, and
the second threshold value is equal to or less than the first threshold value.

## Patentansprüche

1. Kältekreislaufeinrichtung, aufweisend:
einen Kältemittelkreislauf (40), der eingerichtet ist, zu bewirken, dass Kältemittel zirkuliert;
eine Wärmetauschereinheit (1, 2), in der ein Wärmetauscher des Kältemittelkreislaufs (40) untergebracht ist; und
eine Steuerungseinheit (30), die eingerichtet ist, die Wärmetauschereinheit (1, 2) zu steuern,
wobei die Wärmetauschereinheit (1, 2) mit einem Luftsendelüfter (5f, 7f) und einem elektrischen Kältemitteldetektor (98, 99) ausgestattet ist,
wobei die Steuereinheit (30) eingerichtet ist, zu veranlassen, dass der Luftsendelüfter (5f, 7f) läuft,
**dadurch gekennzeichnet, dass** die Steuereinheit (30) eingerichtet ist, ein Detektionssignal von dem Kältemitteldetektor (98, 99) zu ignorieren, wenn eine Drehgeschwindigkeit des Luftsendelüfters (5f, 7f) gleich ist wie oder größer ist als ein erster Schwellenwert, selbst wenn die Steuereinheit (30) eine Leckage von Kältemittel auf der Grundlage des Detektionssignals von dem Kältemitteldetektor (98, 99) detektiert.

2. Kältekreislaufeinrichtung nach Anspruch 1, wobei die Steuereinheit (30) eingerichtet ist, eine Benachrichtigung über die Leckage von Kältemittel auszugeben, wenn die Steuereinheit (30) den Luftsendelüfter (5f, 7f) veranlasst, mit einer Drehgeschwindigkeit zu laufen, die unter dem ersten Schwellenwert liegt, und die Steuereinheit (30) die Leckage von Kältemittel auf der Grundlage des Detektionssignals von dem Kältemitteldetektor (98, 99) detektiert.

3. Kältekreislaufeinrichtung nach Anspruch 2,
wobei in einem Zustand, in dem die Steuereinheit (30) dazu eingerichtet ist, keine Benachrichtigung über die Leckage von Kältemittel auszugeben, selbst wenn die Steuereinheit (30) die Leckage von Kältemittel auf der Grundlage des Detektionssignals von dem Kältemitteldetektor (98, 99) detektiert, wenn eine Drehgeschwindigkeit des Luftsendelüfters (5f, 7f) gleich ist wie oder größer ist als der erste Schwellenwert, die Steuereinheit (30) eingerichtet ist, die Benachrichtigung über die Leckage von Kältemittel auszugeben, wenn die Drehgeschwindigkeit des Luftsendelüfters (5f, 7f) niedriger wird als ein zweiter Schwellenwert, und
der zweite Schwellenwert gleich ist wie oder kleiner ist als der erste Schwellenwert.

4. Kältekreislaufeinrichtung nach einem der Ansprüche 1 bis 3, wobei sich der Wärmetauscher ein lastseitiger Wärmetauscher (7) des Kältemittelkreislaufs (40) ist.

5. Kältekreislaufeinrichtung nach einem der Ansprüche 1 bis 3, wobei der Wärmetauscher ein wärmequellenseitiger Wärmetauscher (5) des Kältemittelkreislaufs (40) ist.

6. Kältekreislaufsystem, aufweisend:
eine Kältekreislaufeinrichtung, aufweisend einen Kältemittelkreislauf (40), der eingerichtet ist, zu bewirken, dass Kältemittel zirkuliert, und eine Steuereinheit (30), die eingerichtet ist, den Kältemittelkreislauf (40) zu steuern;
einen Luftsendelüfter (604, 607), der durch die Steuereinheit (30) gesteuert wird; und
einen elektrischen Kältemitteldetektor (605, 608), der eingerichtet ist, ein Detektionssignal an die Steuereinheit (30) auszugeben,
wobei die Steuereinheit (30) eingerichtet ist, zu veranlassen, dass der Luftsendelüfter (604, 607) läuft,
**dadurch gekennzeichnet, dass** die Steuereinheit (30) eingerichtet ist, ein Detektionssignal von dem Kältemitteldetektor (605, 608) zu ignorieren, wenn eine Drehgeschwindigkeit des Luftsendelüfters (604, 607) gleich ist wie oder größer ist als ein erster Schwellenwert, selbst wenn die Steuereinheit (30) eine Leckage von Kältemittel auf der Grundlage des Detektionssignals von dem Kältemitteldetektor (605, 608) detektiert.

7. Kältekreislaufsystem nach Anspruch 6, wobei die Steuereinheit (30) eingerichtet ist, eine Benachrichtigung über die Leckage von Kältemittel auszugeben, wenn die Steuereinheit (30) den Luftsendelüfter (604, 607) veranlasst, mit einer Drehgeschwindigkeit zu laufen, die unter dem ersten Schwellenwert liegt, und die Steuereinheit (30) die Leckage von Kältemittel auf der Grundlage des Detektionssignals von dem Kältemitteldetektor (605, 608) detektiert.

8. Kältekreislaufsystem nach Anspruch 7, wobei
in einem Zustand, in dem die Steuereinheit (30) eingerichtet ist, keine Benachrichtigung über die Leckage von Kältemittel auszugeben, selbst wenn die Steuereinheit (30) die Leckage von Kältemittel auf der Grundlage des Detektionssignals von dem Kältemitteldetektor (605, 608) detektiert, wenn eine Drehgeschwindigkeit des Luftsendelüfters (604, 607) gleich ist wie oder größer ist als der erste Schwellenwert, die Steuereinheit (30) eingerichtet ist, die Benachrichtigung über die Leckage von Kältemittel auszugeben, wenn die Drehgeschwindigkeit des Luftsendelüfters (604, 607) niedriger wird als ein zweiter Schwellenwert, und
der zweite Schwellenwert gleich ist wie oder kleiner ist als der erste Schwellenwert.

## Revendications

1. Dispositif à cycle de réfrigération comprenant :
un circuit de réfrigérant (40) conçu pour faire circuler le réfrigérant ;
une unité d'échangeur de chaleur (1, 2) qui abrite un échangeur de chaleur du circuit de réfrigérant (40) ; et
un dispositif de commande (30) conçu pour commander l'unité d'échangeur de chaleur (1, 2),
l'unité d'échangeur de chaleur (1, 2) étant pourvue d'un ventilateur envoyant de l'air (5f, 7f) et d'un détecteur électrique de réfrigérant (98, 99),
le dispositif de commande (30) étant conçu pour faire fonctionner le ventilateur envoyant de l'air (5f, 7f),
**caractérisé en ce que** le dispositif de commande (30) est conçu pour ne pas tenir compte d'un signal de détection provenant du détecteur de réfrigérant (98, 99) lorsqu'une vitesse de rotation du ventilateur envoyant de l'air (5f, 7f) est égale ou supérieure à une première valeur de seuil, même si le dispositif de commande (30) détecte une fuite de réfrigérant sur la base du signal de détection provenant du détecteur de réfrigérant (98, 99).

2. Dispositif à cycle de réfrigération selon la revendication 1, dans lequel le dispositif de commande (30) est conçu pour émettre une notification concernant la fuite de réfrigérant lorsque le dispositif de commande (30) fait fonctionner le ventilateur envoyant de l'air (5f, 7f) à une vitesse de rotation inférieure à la première valeur de seuil et que le dispositif de commande (30) détecte la fuite de réfrigérant sur la base du signal de détection provenant du détecteur de réfrigérant (98, 99).

3. Dispositif à cycle de réfrigération selon la revendication 2, dans lequel,
dans un état dans lequel le dispositif de commande (30) est conçu pour ne pas émettre de notification concernant la fuite de réfrigérant même si le dispositif de commande (30) détecte la fuite de réfrigérant sur la base du signal de détection provenant du détecteur de réfrigérant (98, 99) lorsqu'une vitesse de rotation du ventilateur envoyant de l'air (5f, 7f) est égale ou supérieure à la première valeur de seuil, le dispositif de commande (30) est conçu pour émettre la notification concernant la fuite de réfrigérant lorsque la vitesse de rotation du ventilateur envoyant de l'air (5f, 7f) devient inférieure à une seconde valeur de seuil, et
la seconde valeur de seuil est égale ou inférieure à la première valeur de seuil.

4. Dispositif à cycle de réfrigération selon l'une quelconque des revendications 1 à 3, dans lequel l'échangeur de chaleur est un échangeur de chaleur côté charge (7) du circuit de réfrigérant (40).

5. Dispositif à cycle de réfrigération selon l'une quelconque des revendications 1 à 3, dans lequel l'échangeur de chaleur est un échangeur de chaleur côté source de chaleur (5) du circuit de réfrigérant (40).

6. Système à cycle de réfrigération comprenant :
un dispositif à cycle de réfrigération comprenant un circuit de réfrigérant (40) conçu pour faire circuler le réfrigérant et un dispositif de commande (30) conçu pour commander le circuit de réfrigérant (40) ;
un ventilateur envoyant de l'air (604, 607) commandé par le dispositif de commande (30) ; et
un détecteur électrique de réfrigérant (605, 608) conçu pour émettre un signal de détection vers le dispositif de commande (30),
le dispositif de commande (30) étant conçu pour faire fonctionner le ventilateur envoyant de l'air (604, 607),
**caractérisé en ce que** le dispositif de commande (30) est conçu pour ne pas tenir compte du signal de détection provenant du détecteur de réfrigérant (605, 608) lorsqu'une vitesse de rotation du ventilateur envoyant de l'air (604, 607) est égale ou supérieure à une première valeur de seuil, même si le dispositif de commande (30) détecte une fuite de réfrigérant sur la base du signal de détection provenant du détecteur de réfrigérant (605, 608).

7. Système à cycle de réfrigération selon la revendication 6, dans lequel le dispositif de commande (30) est conçu pour émettre une notification concernant la fuite de réfrigérant lorsque le dispositif de commande (30) fait fonctionner le ventilateur envoyant de l'air (604, 607) à une vitesse de rotation inférieure à la première valeur de seuil et que le dispositif de commande (30) détecte la fuite de réfrigérant sur la base du signal de détection provenant du détecteur de réfrigérant (605, 608).

8. Système à cycle de réfrigération selon la revendication 7, dans lequel,
dans un état dans lequel le dispositif de commande (30) est conçu pour ne pas émettre de notification concernant la fuite de réfrigérant même si le dispositif de commande (30) détecte la fuite de réfrigérant sur la base du signal de détection provenant du détecteur de réfrigérant (605, 608) lorsqu'une vitesse de rotation du ventilateur envoyant de l'air (604, 607) est égale ou supérieure à la première valeur de seuil, le dispositif de commande (30) est conçu pour émettre la notification concernant la fuite de réfrigérant lorsque la vitesse de rotation du ventilateur envoyant de l'air (604, 607) devient inférieure à une seconde valeur de seuil, et
la seconde valeur de seuil est égale ou inférieure à la première valeur de seuil.
